# EUROPEAN PATENT APPLICATION

(11) **EP 1 343 080 A2**
(43) Date of publication of application: **10.09.2003**
(21) Application number: 03251383.0
(22) Date of filing: 07.03.2003
(51) Int. Cl.: G06F 9/44

(54) **A user interface generator and method of automatically generating a user interface**

(30) Priority: 07.03.2002 US 94287
(71) Applicant: Hewlett-Packard Company, Palo Alto, CA 94303 (US)
(72) Inventor: Olsen, Jesse Dale, Fort Collins, CO 80525 (US)
(74) Representative: Tollett, Ian

(57) **Abstract**

A user interface generator (131), stored on a medium for storing computer-readable instructions, can receive a call from an executing application (130), access an Extensible Markup Language Schema Definition (XSD) file (103), and generate a user interface (132) in accordance with data structure specified in said XSD file (103). A schema editor (102a) for preparing Extensible Markup Language Schema Definition (XSD) files (105b), stored on a medium for storing computer-readable instructions, can accept user input defining data structure in an Extensible Markup Language (XML) file and provide one or more user input mechanisms (121, 122) for collecting data corresponding to said defined data structure.

## Description

The present invention relates to a method of automatically generating a user interface, to a method of preparing schema specification files with a schema editor, and to a computer system comprising a user interface generator. More specifically, the present invention relates to the field of Extensible Markup Language (XML) files and corresponding Extensible Markup Language Schema Definitions (XSD).

The user of a service on a computer or computer network typically submits input data or a command to the service. The service then returns a result according to what the service is and how it is programmed to operate. For example, a service may be a file server that returns a file to a user in response to a command to serve up the specified file. Alternatively, a service may be a database that returns a search result based on a set of input search criteria. There are infinite examples of a "service" as that term is broadly defined herein.

Currently, there is a trend to provide services via a computer network, such as the Internet or World Wide Web (the "Web"). Basing a service on a network allows that service to be accessed by a larger number of users from a larger number of locations. Network-based services may also be accessed from wireless devices that communicate with the network. The more widely available a service is, the more useful and used the service will likely be.

In order for services to be provided over a network, particularly a network as diverse as the Internet, there must be a reasonably common mechanism for providing input data to, and sharing data among, those services. Currently, extensible markup language (XML) provides a widely used language in which data can be passed among services, particularly services on the web. An XML file is a file containing data that is written in a particular syntax dictated by the XML standard.

An XML Schema Definition (XSD) describes the data in a particular XML file. The XSD may give a label to a certain type of data in the XML file and specify the format of that type of data. For example, an XML file may contain a number of names and corresponding phone numbers. The XSD for that XML file may define the list of names as a particular type of data labeled "name" and may specify that each piece of data of the "name" type is a string of alphabetic characters. Similarly, the XSD may specify another type of data in the XML file that is called "phonenumber" and may specify that each piece of data of the "phonenumber" type is a string of numbers.

XSD data types may be complex, meaning that a defined type of data is composed of certain other types of data that are also defined. An XSD may define an address as a particular type of complex data. The label for this data type may be "address." An "address" may be defined in an XSD document as a data structure comprised of, for example, an element of a data type labeled "street" and specified as an alphanumeric string, an element of a data type labeled "city" and specified as an alphabetic string and an element of a data type labeled "state" and specified as an alphabetic string. An XSD may also define how many times a particular type of data element can occur in the XML file.

The XSD used by a particular XML file may be a separate file or document referenced by the XML file. Alternatively the XSD used by a particular XML file may be incorporated into that XML file.

In one possible embodiment, the present invention provides a user interface generator that can receive a call from an executing application, access an Extensible Markup Language Schema Definition (XSD) file, and generate a user interface in accordance with data structure specified in the XSD file.

In another possible embodiment, the present invention provides a schema editor for preparing Extensible Markup Language Schema Definition (XSD) files that can accept user input defining data structure in an Extensible Markup Language (XML) file and provide one or more user input mechanisms for collecting data corresponding to the defined data structure. The present invention also encompasses a method of automatically generating a user interface by accessing an Extensible Markup Language Schema Definition (XSD) file and generating a user interface in accordance with data structure specified in the XSD file.

The present invention may also be embodied as a method of preparing Extensible Markup Language Schema Definition (XSD) files with a schema editor by accepting user input defining data structure in an Extensible Markup Language (XML) file and providing one or more user input mechanisms for collecting data corresponding to the defined data structure.

The accompanying drawings illustrate preferred embodiments of the present invention and are a part of the specification. Together with the following description, the drawings demonstrate and explain the preferred embodiments. The illustrated embodiments are examples of the present invention and do not limit the scope of the invention.

Fig. 1 is a block diagram of a computer system including a schema editor and an XML editor according to principles of the present invention.

Fig. 2 is a flowchart illustrating a method of transferring data that was input to an application into an XML file.

Fig. 3 is an illustration of a schema editor according to principles of the present invention that can generate an XML file based on an XSD document.

Fig. 4 is block diagram of a user interface generator according to principles of the present invention, where the interface generator generates a user interface based on an underlying XSD file.

Fig. 5 is a flowchart illustrating operation of the interface generator pictured in Fig. 4 according to principles of the present invention.

Throughout the drawings, identical reference numbers designate identical elements.

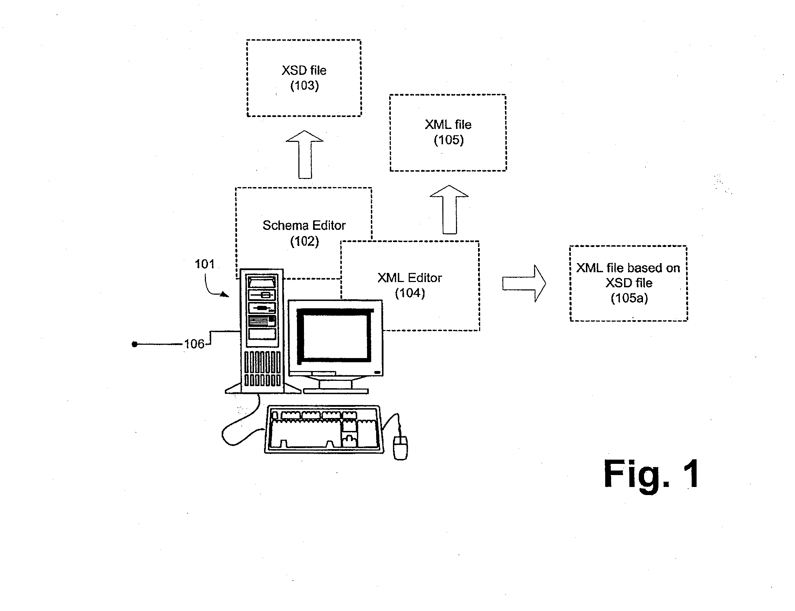

Fig. 1 illustrates a computer system (101) that can be used in practicing the present invention. As shown in Fig. 1, the computer system (101) will preferably consist of a central processing unit, a monitor and user input devices, such as a keyboard and mouse. The computer system (101) may be connected (106) to a network, for example, a Local Area Network (LAN), a Wide Area Network (WAN) or a global network such as the Internet or the Web.

The computer system (101) illustrated in Fig. 1 may also have an XML editor (104) stored thereon. The XML editor (104) may be stored on the system's hard drive and can be run by a user of the system (101) when desired. The XML editor (104) allows the user who is operating the keyboard and mouse of the system (101) to generate an XML document (105).

The XML editor (104) can simply be, for example, a word processor. If the editor (104) is a word processor, the user will have to know proper XML syntax so that he or she can draft an XML document (105) using the word processor. Alternatively, the XML editor (104) may have tools that assist the user in putting data into proper XML syntax. In either event, the result is an XML file (105).

Additionally, the computer system (101) preferably includes a schema editor (102). The schema editor (102) may also be stored on the system's hard drive and can be run by a user of the system (101) when desired. The schema editor (104) allows the user who is operating the keyboard and mouse of the system (101) to generate an XSD document (103.)

As before, the schema editor (102) can simply be, for example, a word processor. If the editor (102) is a word processor, the user will have to know proper XSD syntax so that he or she can draft an XSD file (103) using the word processor. Alternatively, the schema editor (102) may have tools that assist the user in defining data structures according to the XSD syntax. In either event, the result is an XSD file (103).

An XML file (105) may or may not conform to the specifications of the XSD file (103). However, if the XML file (105) references the XSD file (103), for example, by address, or incorporates the data structure definitions of the XSD file (103), the XML file (105a is based on or compliant with the XSD file (103).

The value of having the XML file (105a) compliant with the XSD file (103) occurs in the sharing of the XML file (105a) among different services. If a given service is also compliant with the specifications of the XSD file (103), it becomes very easy to prepare XML files (105a) that can be optimally understood and used by that service.

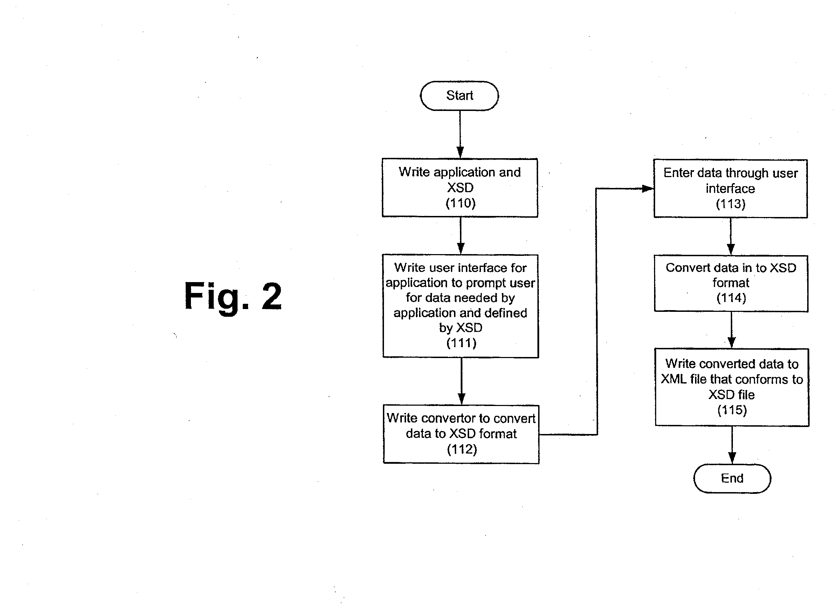

As shown in Fig. 2, in the past, it has been difficult to prepare an XML file according to a particular XSD document. First, an application is developed (110) along with a XSD file that is to govern XML files produced by the application. Next, the application developer must write a user interface (111) for the application that appropriately prompts a user for the data set that the application is to work with and which may be passed to a service in the form of an XML file.

Next the application developer must write a conversion algorithm (112) to convert the data collected through the user interface to XML syntax according to the data structure specified by the XSD document. After these several steps, the application development is complete and the application can be executed and used by the end-user.

Moving to the second column of Fig. 2, the user enters data (113) as prompted through the user interface that is part of the application. Next, the conversion algorithms convert the entered data (114) into XML syntax according to the data structure specified in the XSD document. The converted data is then written to an XML file that conforms to the XSD document (115). The XML file can then be used by the application or transmitted to another service as needed.

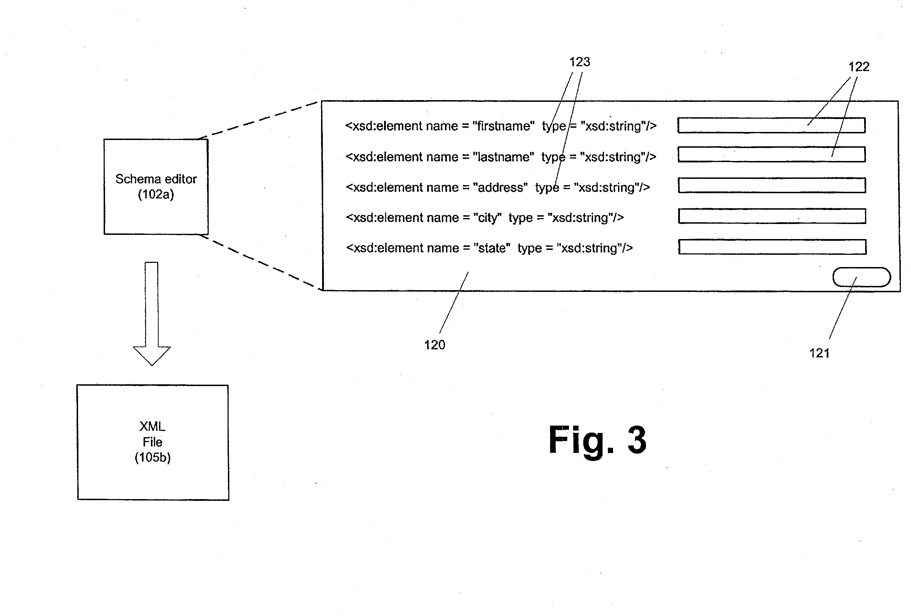

Fig. 3 illustrates a preferred embodiment of the present invention in which an improved schema editor (102a) is used to generate an XML file (105b) that complies with a particular schema specification. As described above, XSD is one system for specifying a schema for an XML file. Document Type Definition (DTD) is another system for specifying a schema for an XML file. In the following text, the present invention is described using XSD as the example of a preferred schema system. However, it will be understood by those skilled in the art that the present invention can be practiced with any schema system now known or later developed.

As shown in Fig. 3, the schema editor (102a) has a user interface (120) with which a user can draft any number of data element definitions (123). Each element definition (123) labels a type of data and dictates the form of that type of data, e.g., a string, decimal, integer, etc. As noted above, a data type definition may be complex consisting of a number of sub-element definitions.

In addition, the user interface (120) may include a device (e.g., 122, 121) allowing a user to input actual data of the type specified by an element definition (123). For example, as shown in Fig. 3, the schema editor (102a) may supply input fields (122) adjacent to the data element definitions (123). Consequently, a user can input actual data into those fields, where the data input in any field (122) is of the type specified by the adjacent or associated XSD element definition (123).

The user interface (120) may also include a button (121) that can be selected, e.g., clicked, by the user to accept the data entered into the fields (122) and clear those fields to allow further data entry. Because the data entered through the fields (122) is data for which an XSD definition (123) is supplied and because each data entry is associated with an XSD definition due to the field (122) in which it is entered, the schema editor (102a) can very easily and automatically format the entered data using appropriate syntax into an XML file (105b) that complies with the XSD document created on, or currently opened in, the schema editor (102a).

If the XSD document dictates a set number of times that a type of data element can recur, the button (121) may cease to clear the data entry field for that type of data after the maximum number of entries allowed has been made. In an alternate design, there may be a button (e.g., 121) for each data entry field that disappears when the maximum allowed number of entries for that data type has been made. Alternatively, there may be one button (121) for each group of related data types, e.g., a complex data definition.

Using the schema editor (102a) of Fig. 3, an XML file (105b) that complies with a particular XSD can be quickly and easily generated. There is no need for the creation of a set of conversion algorithms that convert unformatted data into an XML file governed by a particular XSD, as was illustrated in Fig. 2.

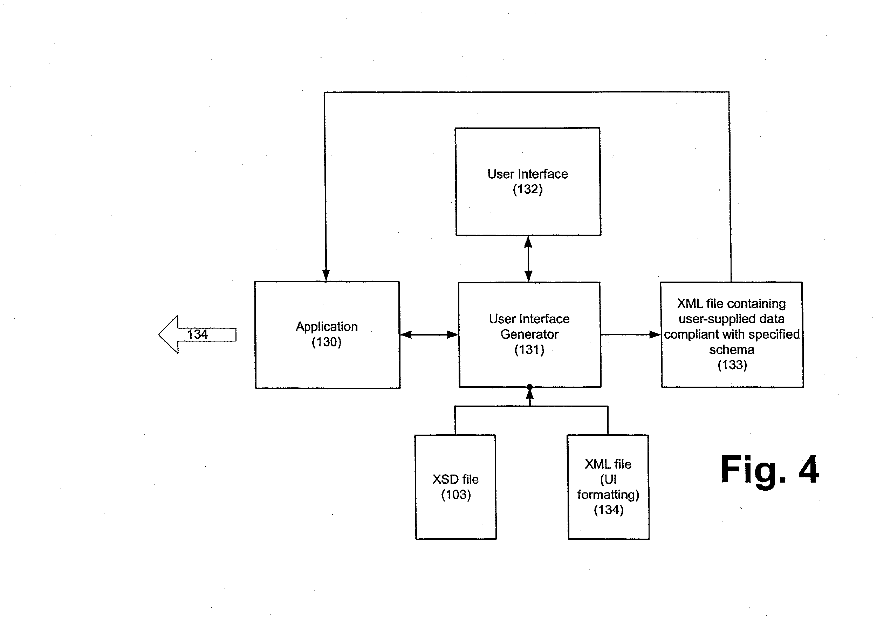

Fig. 4 is a block diagram illustrating a user interface generator according to principles of the present invention. The embodiment of Fig. 4 uses some of the same ideas as the schema editor of Fig. 3. In Fig. 3, the schema editor (102a) associated a data input mechanism with data structure specified by an XSD document. In Fig. 4, rather than producing a data input mechanism listed with individual data element definitions in the XSD document, the data input mechanism is generated as a separate user interface which, nevertheless, still corresponds to the data structure specified by an XSD file.

As shown in Fig. 4, an application (130) may be running on a computer system (e.g., 101; Fig. 1). The application (130) may require input data for its own operation or to transmit to a service. In the past, the developer of the application (130) has had to devote time and resources to coding a user interface that prompts the user for the needed data. Under principles of the present invention, however, the application (130) in Fig. 4 need not have its own user interface. Consequently, the application (130) is easier and less costly to produce, allowing the application developer to focus on the service or services provided by the application (130) rather than interfacing the application (130) with its users.

Under principles of the present invention, a generic user interface generator (131) may be bundled with the application (130). When the application (130) needs input from the user, the application (130) invokes the user interface generator (131).

In addition to the user interface generator (131), an XSD file (103) may be specified by the application (130) or the user. The XSD file (103) will provide the data structure definition for XML files to be generated.

The XSD file (103) may be specified by a network address such as a Universal Resource Locator (URL). Alternatively, the XSD (103) may be bundled with the application (130) when the application (130) is distributed.

When the application (130) requires user input, the application (130) invokes the user interface generator (131). When the application (130) invokes the user interface generator (131), the user interface generator (131) will access the XSD file (103). From the XSD file (103), the user interface generator (131) obtains, for example, a listing of the types of data required; how, if at all, that data is grouped into more complex data elements; how many times a particular type of data element can recur, etc. Using this information, the user interface generator (131) automatically creates a user interface (132) that allows a user to input data that corresponds to the data structure specified by the XSD file (103).

The elements of the user interface (132) will correspond to the data types and structure specified in the XSD file (103). For example, if the XSD file (103) defines one or more data types that are strings, the user interface (132) may include a series, list or table of data entry fields that prompt a user to input those strings. Similarly, if the XSD file (103) defines one or more data types that are integers, the user interface (132) may include a series or list or table of data entry fields that prompt a user to input those integers. If the XSD file (103) defines one or more data types that are Boolean variables, the user interface (132) may use a radio button panel to allow the user to select one of the Boolean options. The user interface generator (131) may use any user input device in the interface (132) that corresponds to the data structure specified by the XSD file (103) including, but not limited to, data entry fields, a table, a tree, radio button panels, pull-down menus, checklists accepting multiple selections, etc.

Additionally, the user interface (132) may allow the user to navigate through the type of data to be entered. For example, the user interface (132) may include a listing of all the types of data defined by the XSD file (103). Some of these are likely to be complex data types. If the user selects an entry from the list or, for example, a button associated with a particular data type, the user interface (132) will then prompt the user to enter that type of data element using an appropriate data entry mechanism. It the selection is a complex data type, the interface (132) will prompt the user for each sub-element of that data type. In this way, the user is given control over what data is collected and, perhaps, how the application (130) operates.

The application (130), user interface generator (131) and XSD file (103) may reside on a single computer system, such as the system (101) illustrated in Fig. 1. In that case, the user interface (132) would likely have graphical components displayed on the monitor of the computer system (101) and would accepted input from the keyboard and/or mouse of the computer system (101).

However, the application (130) may be running on a computer system (101) that has a network connection (106; Fig. 1). In that case, the user interface generator (131) and/or the XSD file (103) may be located somewhere on the network (106), but accessible to the computer system (101) and the application (130) running thereon.

After the user interface (132) is generated and displayed, the user may make appropriate input entries. The data is collected by the user interface generator (131) which writes the data into an XML file (133) using appropriate XML syntax. Because the data solicited and written to the XML file (133) is only that specified by the XSD file (103), the XML file (133) is valid with respect to the XSD file (103). The XML file (133) may reference the XSD file (103) by, for example, a network address such as a URL. Alternatively, the XML file (133) may be written to include data structure definitions from the XDS file (103).

The XML file (133) is then, preferably, passed back to the application (130) from the user interface generator (131). This supplies the application (130) with the necessary input data either for the application (130) itself or for transmission (134) to another application or service, whether on the same machine or a network to which the computer system running the application (130) is connected.

In another aspect of the present invention, the user interface generator (131) could be configured to read annotations in an XSD file (103) and use the information from the annotations to format the user interface (132). In this way, the application developer, who may also supply the XSD file (103), can exercise some control over the appearance and format of the user interface (132) by placing instructions to the user interface generator (131) in the annotations of the XSD file (103).

For example, the developer may want a particular collection of data to be entered or viewed as a tree, a table, a list, etc. The way that data should be display or gathered can be written in the XSD file (103) as annotations. The annotations may also contain other information such as color schemes, look-and-feel settings, etc., that can be implemented in the user interface (132) by the user interface generator (131).

Additionally or alternatively, the application developer may supply an XML file (134), or multiple cascading XML files, for use by the user interface generator (131) that contain data specifying the format, structure and/or appearance of the user interface (132). Consequently, using XSD file annotations and/or a separate XML file(s) (134), the application developer can leave the generation of the user interface (132) to the automated user interface generator (131) but can still exercise as much control desired over the appearance, format, etc. of the resulting user interface (132).

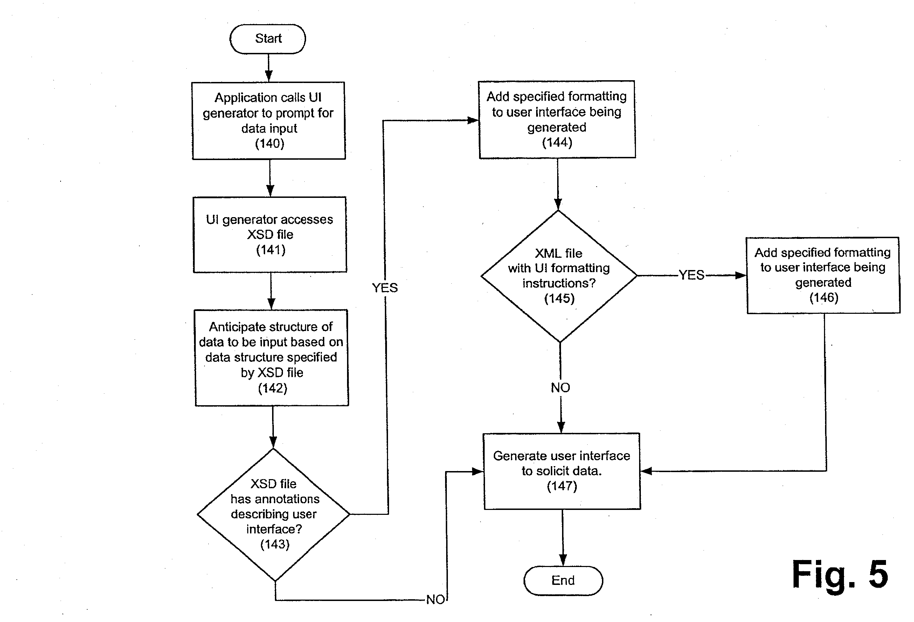

Fig. 5 is a flowchart illustrating the operation of a user interface generator according to principles of the present invention. The flowchart of Fig. 5 may also be taken as a template allowing one of ordinary skill in the art to code a user interface generator according to principles of the present invention without undue experimentation.

As shown in Fig. 5, the method begins when an application calls the user interface generator to generate a user interface for prompting user data input. (140). The user interface generator then accesses an XSD file that will govern the structure of the data to be collected by the user interface. (141). The user interface generator anticipates the structure of data to be input to the user interface based on the data structure specified by the XSD file. (142).

As described above, the XSD file may have annotations that provide instructions on formatting or organizing the user interface. (143). If so, the specified formatting is added to the user interface being generated. (144). Alternatively, an XML file may be supplied that contains instructions for formatting the user interface. (145). If so, the specified formatting or organization is added to the user interface. (146).

The method is completed when the user interface is generated based on the data structure of the XSD file and any interface formatting instructions provided in the annotations of the XSD file and/or a separate XML file. The user interface can then be used to solicit data input from a user.

Following these explanations and explanatory examples, the scope of the present invention is to be determined from the appended claims.

## Claims

1. A method of automatically generating a user interface, said method comprising:
accessing a schema specification file (141); and
generating a user interface in accordance with data structure specified in said schema specification file (147).

2. The method of claim 1, wherein said schema specification file is an Extensible Markup Language Schema Definition (XSD) file (103).

3. The method of claim 1, further comprising writing data received through said user interface to an Extensible Markup Language (XML) file (133).

4. The method of claim 2, further comprising generating said user interface in accordance with data stored in annotations in said XSD file (143).

5. The method of claim 1, further comprising:
accessing an Extensible Markup Language (XML) file containing specifications regarding format or appearance of said user interface (145); and
generating said user interface in accordance with said specifications from said XML file (146).

6. A method of preparing schema specification files with a schema editor, said method comprising:
accepting user input defining data structure in an Extensible Markup Language (XML) file (105b); and
providing one or more user input mechanisms (122, 121) for collecting data corresponding to said defined data structure.

7. A computer system (101) comprising:
a central processing unit;
a user input device;
a monitor; and
a user interface generator (131) stored on a medium for storing computer-readable instructions, said user interface generator being configured to receive a call from an application (130) executing on said central processing unit, access an Extensible Markup Language Schema Definition (XSD) file (103), and generate a user interface (132) in accordance with data structure specified in said XSD file (103).

8. The computer system of claim 7, wherein said user interface generator (131) is further configured to write data received through said user interface (132) to an Extensible Markup Language (XML) file (133).

9. The computer system of claim 8, wherein said user interface generator (131) is further configured to pass said XML file (133) to said executing application (130).

10. The computer system of claim 8, wherein said user interface generator (131) is further configured to:
access an Extensible Markup Language (XML) file (134) containing specifications regarding format or appearance of said user interface (132); and
generate said user interface (132) in accordance with said specifications from said XML file (134).
